# EUROPEAN PATENT SPECIFICATION

(11) **EP 0 650 798 B1**
(45) Date of publication and mention of the grant of the patent: **11.02.1998**
(21) Application number: 94117029.2
(22) Date of filing: 27.10.1994
(51) Int. Cl.: B23K 35/00, B23K 20/16

(54) **Method of joining titanium-aluminum intermetallic compounds**
Verfahren zum Verbinden von Titan-Aluminium intermetallische Verbindungen
Procédé pour lier des composés intermétalliques titane-aluminium

(30) Priority: 28.10.1993 JP 271036/93
(43) Date of publication of application: 03.05.1995
(73) Proprietor: AISIN SEIKI KABUSHIKI KAISHA, Kariya City Aichi Pref. (JP)
(72) Inventor: Yamaguchi, Shuhei, Kariya city, Aichi pref. (JP); Kusano, Toshikuni, Toyota city, Aichi pref. (JP)
(74) Representative: Pellmann, Hans-Bernd, Dipl.-Ing.

(56) References cited:
- EP-A- 0 070 177
- EP-A- 0 368 642
- GB-A- 2 016 985
- GB-A- 2 264 079
- US-A- 2 906 008
- PATENT ABSTRACTS OF JAPAN vol. 9, no. 100 (M-376) (1823) 2 May 1985 & JP-A-59 225 881 (HITACHI SEISAKUSHO KK) 18 December 1984

## Description

### BACKGROUND OF THE INVENTION

### 1. Field of the invention:

The present invention relates to a method of joining Titanium-Alminum intermetallic compounds (hereinafter, Titanium-Alminum intermetallic compounds say Ti-Al intermetallic compounds), and more particularly to a joining method between a first joined member made of a Ti-Al intermetallic compound and a second joined member made of metal.

### 2. Description of the prior art:

A conventional method of this kind is disclosed in Japanese patent application laid-open publication No. 4(1992)-288984. According to this method, a Ti-Al intermetallic compound and a super plastic alloy made of Titanium (Ti) or Alminum (Al) which is piled up on the Ti-Al intermetallic compound are pressurized in a vacuum or an atmosphere of inert gas at the heating temperature 400-1000°C. Thereby, the super plastic alloy is made to be deformed non-elastically and both are joined. In this method, since the Ti-Al intermetallic compound and the super plastic alloy are joined in an atmosphere of non-air, in case that an joining surface of the Ti-Al intermetallic compound or the super plastic alloy reached a high temperature, it is able to prevent that Ti or Al contained in the Ti-Al intermetallic compound or the super plastic alloy reacts on atmospheric oxygen.

In the above prior method, however, a vacuum tub or a vacuum container is indispensable to the joining and furthermore a step for evacuating the vacuum tub or for making the inside of the vacuum tub an atmosphere of inert gas is required. Thereby, the man-hour and the manufacturing costs are increased as compared with the method which the joined members are joined in the atmosphere.
Furthermore, since the Ti-Al intermetallic compound and the super plastic alloy made of Ti or Al are joined by means of that the super plastic alloy is made to be deformed non-elastically, burrs are always formed in the vicinity of the joining surfaces. Thereby, a step for removing the burrs is required and therefore the man-hour is increased.

### SUMMARY OF INVENTION

It is, therefore, an object of the present invention to provide an improved method of joining Ti-Al intermetallic compounds which overcomes the above drawbacks.

It is another object of the present invention to provide an improved method of joining Ti-Al intermetallic compounds which can prevent that Ti or Al contained in the Ti-Al intermetallic compound reacts on atmospheric oxygen at the joining in an atmosphere.

In order to achieve these objectives, there is provided a method according to claim 1.

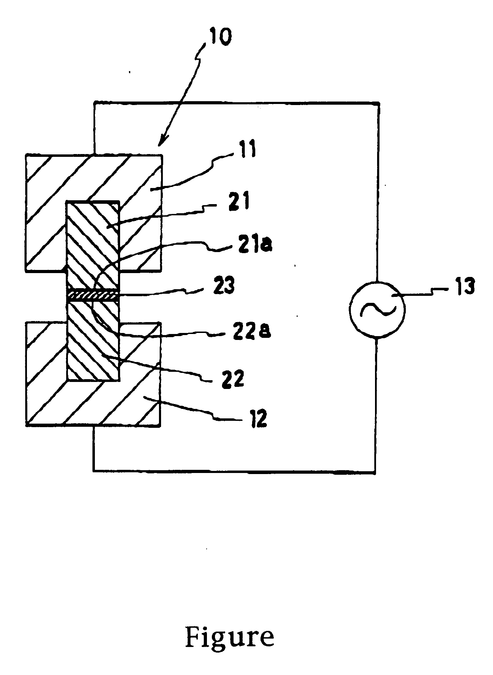

### BRIEF DESCRIPTION OF THE DRAWING

Additional objects and advantages of the present invention will become more apparent from the following detailed description of a preferred embodiment thereof when considered with reference to the attached drawing, in which:
The figure is a schematic view of a device used for an embodiment of a method of joining Ti-Al intermetallic compounds in accordance with the present invention.

### DESCRIPTION OF THE PREFERRED EMBODIMENTS

A method of joining Ti-Al intermetallic compounds constituted in accordance with a preferred embodiment of the present invention will be described with reference to the attached drawing.

The figure shows a device 10 used for an embodiment of a method of joining Ti-Al intermetallic compounds in accordance with the present invention. Referring to the figure, the device 10 is a device for joining by the use of resistance heating (heating by passing the current) and is provided with a pair of electrodes 11, 12 for supporting joined member and an a.c. electric source 13.

This embodiment relates to a method of joining between a first joined member 21 made of a Ti-Al intermetallic compound having the melting point of about 1500-1600°C and a second joined member 22 made of metal and, for example, this method is used for joining a turbine rotor to a shaft. Since Ti-Al intermetallic compound is light weight and is very superior in strength at elevated temperature, when Ti-Al intermetallic compound is applyed to the turbine rotor, the performance of the turbine rotor is improved.

The first joined member 21 made of Ti-Al intermetallic compound and the second joined member 22 made of metal other than Ti-Al intermetallic compound are joined by the use of the above device 10 as follows:
In this embodiment, Ti-Al intermetallic compound (the first joined member 21) which is comprised of following components and whose melting point is 1510°C is used:
   Al : 35.7 % per unit weight, Nickel (Ni) : 0.25 % per unit weight, Boron (B) : 0.04 % per unit weight, Silicon (Si) : 0.03 % per unit weight, Manganese (Mn) : less than 0.02 % per unit weight, Vanadium (V) : 0.01 % per unit weight, Carbon (C) : 0.019 % per unit weight, Oxygen (O) : 0.14 % per unit weight, Nitrogen (N) : 0.006 % per unit weight, Ti : rest. Nickel-Chromium-Molybdenum steel (JIS (Japanese Industrial Standards) SNCM 439, hereinafter the Nickel-Chromium-Molybdenum steel say only SNCM 439) whose melting point is about 1400-1500°C is used as the above metal other than Ti-Al intermetallic compound (the second joined member 22).

First of all an insertion alloy 23 is flame-sprayed on a joining surface 21a of the first joining member 21 made of the above Ti-Al intermetallic compound. Now, it is also possible to use plasma-spraying. The insertion alloy 23 is made of a Nickel-Chromium alloy (Ni-Cr alloy) whose melting point is lower than that of each of the first and second joined members 21, 22. Furthermore, the insertion alloy 23 contains Boron (B), Silicon (Si) as reducing elements and a good diffusiveness and Carbon (C) having a good diffusiveness. Now, in a modification of the above step, it is possible to spray the insertion alloy 23 on a joining surface 22a of the second joined member 22 made of the SNCM 439 and furtheremore it is possible to spray the insertion alloy 23 on both joining surfaces 21a, 22a. Furthermore, the insertion alloy 23 may contain Manganese (Mn), Aluminum (Al) as reducing elements.

Next, the first joined member 21 on which the insertion alloy 23 is sprayed is supported on the electrode 11 so as to expose the insertion alloy 23. The second joined member 22 is supported on the electrode 12 so that the joining surface 22a contacts with the insertion alloy 23. The current is supplied from the a.c. electric source 13 to the electrodes 11, 12 while the pressure of 23,5 MPa (2.4 kgf/mm²) is applied in an atmosphere under the condition in which the joining surface 22a of the second joined member 22 contacts with the insertion alloy 23. Thereby, the first and second joined member 21, 22 and the insertion alloy 23 are heated at a temperature of about 1200°C. As a result, the insertion alloy 23 is immediately diffused and thereby both joining surfaces 21a, 22a are joined. At this time, it is desirable that this heating temperature is higher than solidus (958°C) of the insertion alloy 23 and is lower than each of the melting points of the first and second joined members 21, 22. Now, in a modification of this step, it is possible to heat the first and second joined members 21, 22 and the insertion alloy 23 by the other heating method, for example a high-frequency heating.

As mentioned above, according to the embodiment, since the insertion alloy 23 made of the Ni-Cr alloy which contains Boron (B), Silicon (Si) as reducing elements is sprayed on at least one of the joining surfaces 21a, 22a of the first and second joined members 21, 22, even though both joined members 21, 22 reached a high temperature, it is prevented by the reducing elements Boron (B) and Silicon (Si) that Ti and Al contained in the Ti-Al intermetallic compound reacts on atmospheric oxygen. As a result, it is possible to join the first joined member 21 to the second joined member 22 in an atmosphere and it is unnecessary anymore that the joining has to be done in a vacuum or an atmosphere of inert gas as the above prior method. Accordingly, a vacuum tub or a vacuum container is unnecessary anymore and a step for evacuating the vacuum tub or for making the inside of the vacuum tub an atmosphere of inert gas is removed. Therefore, it is possible to decrease man-hour and therefore it is able to reduce the manufacturing costs.

In case that the Ti-Al intermetallic compound and SNCM 439 (namely, two materials which have different characters, respectively) are joined in an atmosphere by frictional pressure welding, the forming of burrs is decreased at the side of the Ti-Al intermetallic compound which is difficult to be deformed non-elastically and an oxide which is formed on the joining surface of the Ti-Al intermetallic compound is difficult to be pushed out. As a result, a joining strength between the Ti-Al intermetallic compound and the SNCM 439 decreases. Therefore, it is impossible to surely join two materials each of which has different character each other by frictional pressure welding.

On the contrary, according to the present invention, even though the Ti-Al intermetallic compound and the SNCM 439 (both joined members 21, 22) reached a high temperature, it is prevented by means of the reducing elements Boron (B) and Silicon (Si) that an oxide is formed. Therefore, it is possible to remarkably improve the joining strength between both joined members 21, 22 as compared with the above frictional pressure welding. Namely, it is possible to surely join two matrials each of which has different character each other.

Furthermore, since both joined members 21, 22 and the insertion alloy 23 are heated at a temperature which is lower than a melting point of each of both joined members 21, 22, both joined members 21, 22 are not deformed non-elastically. Therefore, the burrs are hardly formed in the vicinity of the joining surfaces 21a, 22a. Accordingly, a step for removing the burrs is unnecessary anymore and therefore the man-hour is decreased.

Furthermore, according to the embodiment, the diffusion rate of the insertion alloy 23 is increased by an effect of Boron (B), Silicon (Si) and Carbon (C) having a good diffusiveness. Thereby, as compared with a conventional diffusion welding (bonding), it is possible to reduce the time required for joining both joined members 21, 22 and it is possible to improve the joining strength. Now, according to the execution of the embodiment by inventors of the present invention, it was confirmed that the joining strength is equal with a pulling strength of the first joined member 21.

In the above mentioned embodiment, the insertion alloy 23 is sprayed on at least one of each of the joining surfaces 21a, 22a of the first and second members 21, 22. In the execution of the present invention, however, the insertion alloy 23 has only to be lain or interposed between both joining surfaces 21a, 22a of the first and second joined members 21, 22 so as to be contacted with both joining surfaces 21a, 22a.

As mentioned above, according to the present invention, since the alloy which contains a reducing element is lain or interposed between the first and second joined members and then both joined members and the alloy are heated, even though both joined members reached a high temperature, it is prevented by the reducing element that Ti and Al contained in the Ti-Al intermetallic compound (the first joined member) reacts on atmospheric oxygen. As a result, it is possible to join the first joined member to the second joined member in an atmosphere without causing a reaction between Ti, Al contained in the Ti-Al intermetallic compound and atmospheric oxygen. Accordingly, a step for evacuating the vacuum tub or for making the inside of the vacuum tub an atmosphere of inert gas which is required for the execution of the above prior method is unnecessary anymore. Therefore, it is able to reduce the man-hour and the manufacturing costs.

Furthermore, according to the present invention, since both joined members and the alloy are heated at a temperature which is lower than a melting point of each of both joined members, both joined members are not deformed non-elastically. Therefore, the burrs are hardly formed in the vicinity of the joining surfaces of both joined members. Accordingly, a step for removing the burrs is unnecessary anymore and therefore the man-hour is decreased.

Furthermore, according to the present invention, since the alloy contains an element having a good diffusiveness, the diffusion rate of the insertion alloy 23 is increased by an effect of the element as compared with a conventional diffusion welding (bonding). Accordingly, it is possible to reduce the time required for joining both joined members and it is possible to improve the joining strength.

## Claims

1. Method of joining Titanium-Aluminium intermetallic compounds, in which
the following steps are being taken;
preparing a first member (21) made of Titanium-Aluminium (Ti-Al) intermetallic compound, a second member (22) made of metal and
heating the first and second members (21, 22) in order to join the first member (21) to the second member (22),
***characterized by***
the following steps:
preparing an insertion-alloy (23) made of a nickel-chromium alloy (Ni-Cr alloy) whose melting point is lower than that of each of the first and second members (21, 22) and which contains Boron and Silicon as reducing elements and Carbon (C);
laying the alloy between the first and second members (21, 22) and
heating the alloy (23) together with the first and second members (21, 22) by a resistance heating or a high frequency heating in the atmosphere at a temperature above the melting point of the alloy (23) but below the melting points of the first and second members (21, 22).

2. Method according to claim 1,
***characterized in that***
the insertion-alloy further contains Manganese (Mn), and Aluminium (Al) as elements having a reduction process.

## Patentansprüche

1. Verfahren zum Verbinden von intermetallischen Titan-Aluminium-Verbindungen mit den folgenden Schritten:
Bereitstellen eines ersten Elementes (21), das aus einer intermetallischen Titan-Aluminium-(Ti-Al)-Verbindung hergestellt ist, und eines zweiten Elementes (22), das aus Metall hergestellt ist, und
Erwärmen des ersten und des zweiten Elementes (21, 22), um das erste Element (21) mit dem zweiten Element (22) zu verbinden,
**gekennzeichnet durch**
die folgenden Schritte:
Bereitstellen einer Einfüglegierung (23), die aus einer Nickel-Chrom-Legierung (Ni-Cr-Legierung) hergestellt ist, deren Schmelzpunkt geringer als der jeweilige Schmelzpunkt des ersten und des zweiten Elementes (21, 22) ist und das Bor und Silizium als Reduktionselemente und Kohlenstoff (C) enthält,
Legen der Legierung zwischen das erste und das zweite Element (21, 22) und
Erwärmen der Legierung (23) zusammen mit dem ersten und dem zweiten Element (21, 22) durch ein Widerstandserwärmen oder ein Hochfreguenzerwärmen bei Umgebungsluft auf eine Temperatur, die oberhalb des Schmelzpunktes der Legierung (23), jedoch unterhalb der Schmelzpunkte des ersten und des zweiten Elementes (21, 22) liegt.

2. Verfahren nach Anspruch 1,
**dadurch gekennzeichnet, daß**
die Einfüglegierung des weiteren Mangan (Mn) und Aluminium (Al) als Elemente mit einem Reduktionsprozeß enthält.

## Revendications

1. Procédé pour lier des composés intermétalliques titane-aluminium, dans lequel on effectue les étapes suivantes;
la préparation d'un premier élément (21) fait d'un composé intermétallique titane-aluminium (Ti-Al), d'un second élément (22) fait d'un métal et
le chauffage des premier et second éléments (21, 22) pour lier le premier élément (21) au second élément (22),
caractérisé par les étapes suivantes:
la préparation d'un alliage d'insertion (23) fait d'un alliage de chrome-nickel (alliage Cr-Ni) dont le point de fusion est plus bas que celui de chacun des premier et second éléments (21, 22) et qui contient du bore et du silicium comme éléments réducteurs et du carbone (C);
la pose de l'alliage entre les premier et second éléments (21, 22) et
le chauffage de l'alliage (23) avec les premier et second éléments (21, 22) par un chauffage ohmique ou un chauffage à haute fréquence dans l'atmosphère à une température au-dessus du point de fusion de l'alliage (23) mais au-dessous des points de fusion des premier et second éléments (21, 22).

2. Procédé selon la revendication 1, caractérisé en ce que l'alliage d'insertion contient en outre du manganèse (Mn) et de l'aluminium (Al) comme éléments ayant un processus de réduction.
